# EUROPEAN PATENT SPECIFICATION

(11) **EP 2 413 104 B1**
(45) Date of publication and mention of the grant of the patent: **03.09.2014**
(21) Application number: 11173518.9
(22) Date of filing: 12.07.2011
(51) Int. Cl.: G01C 21/36, G06T 17/05, G06T 19/00

(54) **Apparatus and method for providing road view**
Vorrichtung und Verfahren zur Straßensichtbereitstellung
Appareil et procédé pour la fourniture de vues routières

(30) Priority: 30.07.2010 KR 20100074305
(43) Date of publication of application: 01.02.2012
(73) Proprietor: Pantech Co., Ltd., Seoul 121-270 (KR)
(72) Inventor: Lee, Sun-Dong, 121-270 Seoul (KR); Choi, Yun-Jae, 121-270 Seoul (KR)
(74) Representative: Herzog, Markus

(56) References cited:
- EP-A1- 2 194 508
- WO-A1-2009/109804
- US-A1- 2008 043 020
- US-A1- 2009 125 234
- US-A1- 2009 315 766
- US-A1- 2010 045 666
- US-A1- 2010 188 503

## Description

### BACKGROUND

FIELD

The following description relates to an apparatus and method for providing a road view at a specific site to a user.

DISCUSSION OF THE BACKGROUND

With the recent expansion of the diversity of services and supplementary features available for mobile communication terminals, various service systems for providing a variety of information to users have been developed. For example, a system has been recently introduced which provides basic information on the location of a mobile communication terminal when a user requests information about his or her current location through the mobile communication terminal carried by the user.

To detect landmark buildings or places in the vicinity of an area where a user is located, current location information identified by a global positioning system (GPS) is transmitted to a server from a GPS-embedded navigation system or mobile terminal, and the server displays a vicinity map and a vicinity image through a screen of the terminal. However, it may be inconvenient for a user who wants to view a vicinity image from different viewpoints since the user only can use key inputs to rotate the screen to see the different viewpoints.

From patent document US2010/0188503, an electronic device is known, comprising a camera to capture an image, a sensor component to detect positioning and orientation of the device, a processor that receives the image and the sensor information and outputs map overlay data, an input mechanism to receive inputs from a user and a display unit that displays the image and the map overlay data.

### SUMMARY

The invention provides an apparatus for providing road view data according to claim 1 and a method of providing road view data according to claim 12.

Additional features of the invention will be set forth in the description which follows, and in part will be apparent from the description, or may be learned by practice of the invention.

An exemplary embodiment of the present invention discloses an apparatus for providing road view data, including: a camera to capture an image and output the captured image; a sensor unit to receive the captured image and output sensing data, comprising a photographing direction of the camera; a manipulation unit to received data, the data including a road view data request signal; a control unit to receive the captured image, the sensing data and the road view data request signal, and to determine, at a reference position, road view data corresponding to the photographing direction of the camera and information, whether to display a view of a street behind an object blocking the camera's view and output the determined road view data in response to the received road view data request signal; a display unit to display image data containing the determined road view data.

An exemplary embodiment of the present invention discloses a method of providing road view data from an apparatus comprising a camera and a sensor unit, the method including: sensing the photographing direction of the camera; determining a reference position of the camera; detecting the road view data corresponding to the reference position and the photographing direction; and outputting the detected road view data.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 depicts an illustrative apparatus for providing road view data according to an exemplary embodiment.

FIG. 2 depicts an illustrative diagram for determining road view data according to an exemplary embodiment.

FIG. 3 depicts an exemplary screen shot displayed by a display unit according to an exemplary embodiment.

FIG. 4 depicts an illustrative control unit according to an exemplary embodiment.

FIG. 5 is an illustrative example of a road map depicting a location change according to an exemplary embodiment.

FIG. 6 is an illustrative example of a road map depicting a temporary location change according to an exemplary embodiment.

FIG. 7 is an illustrative example of a road map depicting see-through levels according to an exemplary embodiment.

FIG. 8A is a diagram illustrating a road map depicting road view data based on a real-time change of the photographing direction at a see-through level according to an exemplary embodiment.

FIG. 8B is a diagram illustrating a road map depicting road view data based on a real-time change of the reference position at a see-through level according to an exemplary embodiment.

FIG. 9 is a flowchart depicting a method of providing road view data according to an exemplary embodiment.

FIG. 10 is a flowchart depicting a method of providing road view data by selecting a see-through mode of operation according to an exemplary embodiment.

FIG. 11 is a flowchart depicting a method of providing road view data by selecting a location change mode of operation according to an exemplary embodiment.

FIG. 12 is a flowchart depicting a method of providing a road view by selecting a temporary location change mode of operation according to an exemplary embodiment.

### DETAILED DESCRIPTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present.

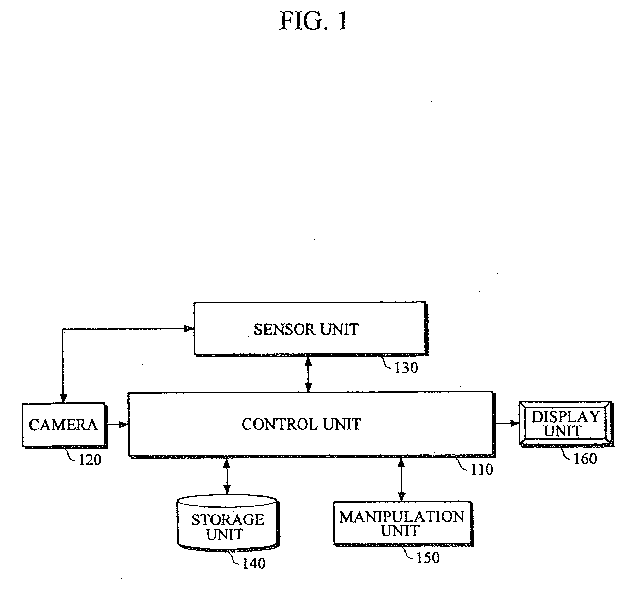

FIG. 1 depicts an illustrative apparatus for providing road view data according to an exemplary embodiment. The apparatus includes a control unit 110, a camera 120, a sensor unit 130, a storage unit 140, a manipulation unit 150, and a display unit 160.

The camera 120 photographs or captures and outputs an image. The camera 120 may establish a photographing direction in which a user desires to view. In addition, the camera 120 may increase or decrease a size of an image, and may be rotated under the control of the control unit 110 either manually or automatically.

The sensor unit 130 detects movement of the apparatus, a current location, a photographing direction, a location change, a speed of the apparatus, and a speed of change of the photographing direction, and outputs the sensing data to the control unit 110. The sensor unit 130 may include any suitable apparatus for sensing the sensing data, for example, a global positioning system (GPS) receiver that receives a camera location information signal transmitted from a GPS satellite, a gyroscopic sensor that detects and outputs an azimuth and an inclination angle of the camera 120, and/or an acceleration sensor that measures speed and acceleration a rotation direction and a degree of rotation of the camera 120, etc.

The storage unit 140 stores road view data, which may include data of map services that provides 360 degree panoramic photographs showing detailed images.. For example, the storage unit 140 may include photographs for different locations. The exemplary road view data may be obtained by a fisheye lens camera which can capture an image with an angle of view of 180 degrees or more, or may be generated by combining a number of previously captured images into a panoramic picture. The storage unit 140 may be embedded in the apparatus or provided outside of the apparatus to receive data over a network. If the storage unit 140 is provided externally to the apparatus to receive the data over a network, the apparatus may further include a communication interface capable of network communication.

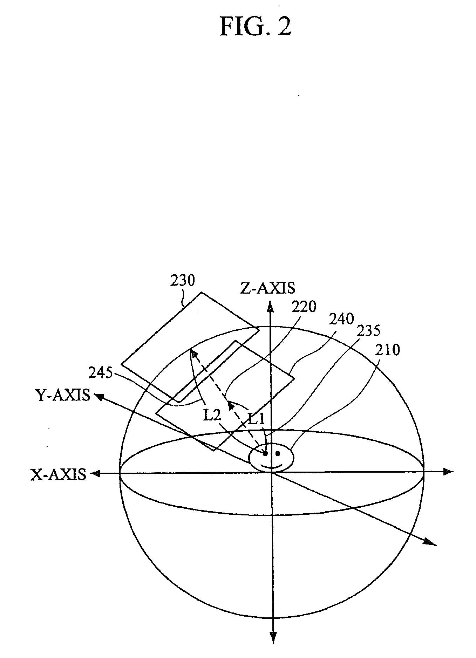

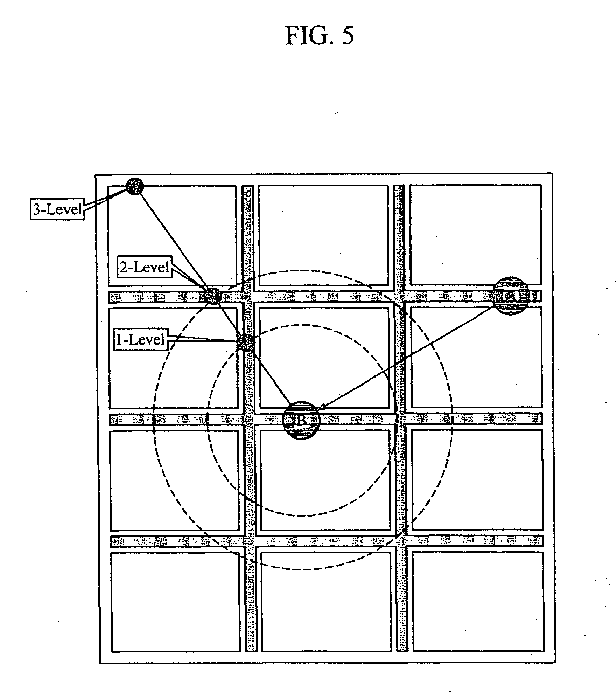

FIG. 2 depicts an illustrative diagram for determining road view data according to an exemplary embodiment. The road view data is data determined by variables including a reference position 210 at which the camera 120 is located, and a photographing direction 220 of the camera 120. The photographing direction 220 may be a unit direction vector that is defined as (X, Y, Z) coordinates on a three-dimensional orthogonal coordinate system having the reference position 210 as an origin. However aspects need not be limited thereto and the photographing direction may be a two-dimensional vector defmed as (X,Y). In an exemplary embodiment, see-through levels 235 and 245 may be used as variables to determine road view data. The see-through level 235 is also defmed by line L1, and see-through level 245 is also defined by the line L2. The see-through levels 235/L1 and 245/L2 are used for detecting a road view behind a building which blocks the view from the photographing direction 220 of the camera. Thus, by using see-through levels, the exemplary apparatus can display the view of a street behind an object blocking the camera's view of the selected road. By way of example, as shown in FIG. 2, if the line L1 is set as a see-through level, a tangent plane 240 is detected as road view data. Tangent plane 240 is formed at the contact point between a sphere, with reference point 210 as its center point and having a radius of the same length as line L1, and a three-dimensional (3D) direction vector with the reference position 210 as a starting point and a length equal of line L1. In other words, the tangent plane 240 is tangent to a sphere, with a center at reference point 210, at a point were the a vector originating from the sphere's center meets the surface of the sphere. Similarly, tangent plane 230 is formed at the contact point between a sphere having L2 as its radius and reference point 210 as its center point and a 3D directional vector of length L2 originating from reference position 210. The storage unit 140 may store road map data corresponding to the vicinity of the reference position 210. Examples of the stored road map are illustrated in FIGS. 5 to 8, and a reference position and a road view data presence area are displayed in each road map.

The manipulation unit 150 is a device that receive user information to provide road view data, and may include, for example, a key input portion that generates key data in response to pressing a key button, a touch screen, a mouse, etc. According to an exemplary embodiment, the information processed by the control unit 110 may be inputted into the apparatus through the manipulation unit 150 in association with the display unit 160. The inputted information may include at least one of a road view data request signal, a seeing-through request signal, a level selection signal, a location change request signal, and a zoom-in/zoom-out request signal

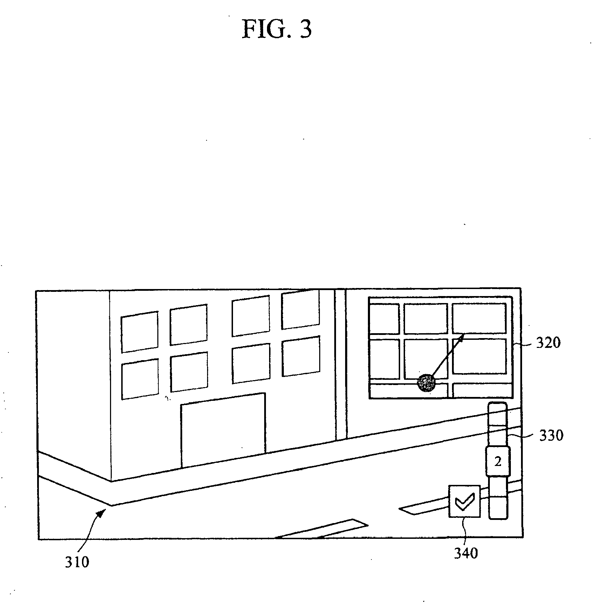

The display unit 160 outputs user interface information received from the control unit 110 and road view data, and may further display a road map. The manipulation unit 150 and the display unit 160 may be integrated with each other to form a user interface, such as a touch screen. An example of a road data provision screen displayed on the display unit 160 is illustrated in FIG. 3. FIG. 3 depicts an exemplary screen shot displayed by a display unit according to an exemplary embodiment. Referring to FIG. 3, the road view data provision screen may include a road view 310 as viewed by a camera at a reference position and a road map 320 of the vicinity of the reference position on a portion of the screen. In addition, a see-through level control bar 330 and a temporary location change checkbox 340 may be included as user interface information in the screen.

In response to a road view request signal input through the manipulation unit 150, the control unit 110 detects a road view corresponding to the reference position and the photographing direction of the camera 120 and based on the sensing information about changes in the reference position and the photographing direction received from the sensor unit 130, and outputs the detected road view to the display unit 160. Additionally, the control unit 110 may detect the road map corresponding to the reference position and output the detected road map along with the road view to the display unit 160, or may output to the display unit only the road map. Furthermore, the control unit 110 may provide a perspective road view in response to a see-through request signal from the manipulation unit 150.

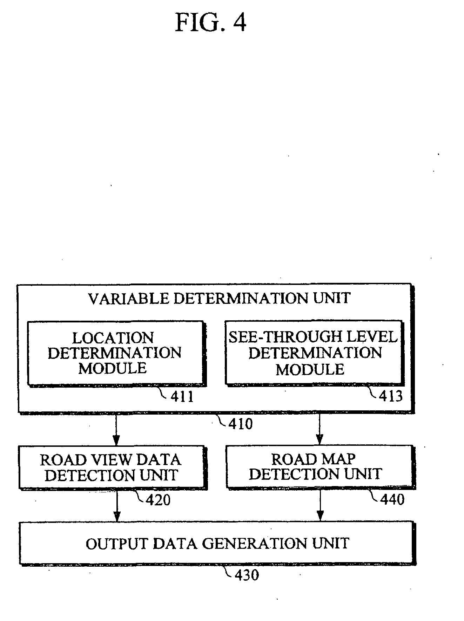

FIG. 4 depicts an illustrative control unit according to an exemplary embodiment.

The control unit 110 includes a variable determination unit 410, a road view data detection unit 420, an output data generation unit 430, and may further include a road map detection unit 440.

The variable determination unit 410 determines reference position information and see-through level information. The reference position information and see-through level information are variables used for road view data detection. The variable determination unit 410 determines the reference position information and the see-through level information based on information inputted through the manipulation unit 150 and sensing information received from the sensor unit 130. The variable determination unit 410 outputs the determined information to the road view detection unit 420.

The road view detection unit 420 detects road view data from the storage unit 140 corresponding to the variables received from the variable determination unit 410. If reference position information is received by the road view detection unit 420, then the road view detection unit 420 also receives photographing direction information from the sensor unit 130, or additionally detects road view data corresponding to the see-through level information.

The output data generation unit 430 outputs the road view data received from the road view data detection unit 420 to the display unit 160. The output data generation unit 430 may further adjust a tilt of the road view based on the camera inclination angle received from the sensor unit 130 and outputs the adjusted road view data to the display unit 160. Moreover, in response to a zoom-in or zoom-out request signal from the manipulation unit 150, the output data generation unit 430 may adjust an angle of view of the road view data, and output the adjusted road view data. Furthermore, the output data generation unit 430 outputs interface information for receiving inputted information for the manipulation unit 150. By way of example, to receive see-through level selection information, the output data generation unit 430 may output a see-through level input window or input bar on the display unit 160. By way of further example, the output data generation unit 430 may generate and output, to the display unit 160, an input button for receiving information about the occurrence of temporary location change according to a location change request.

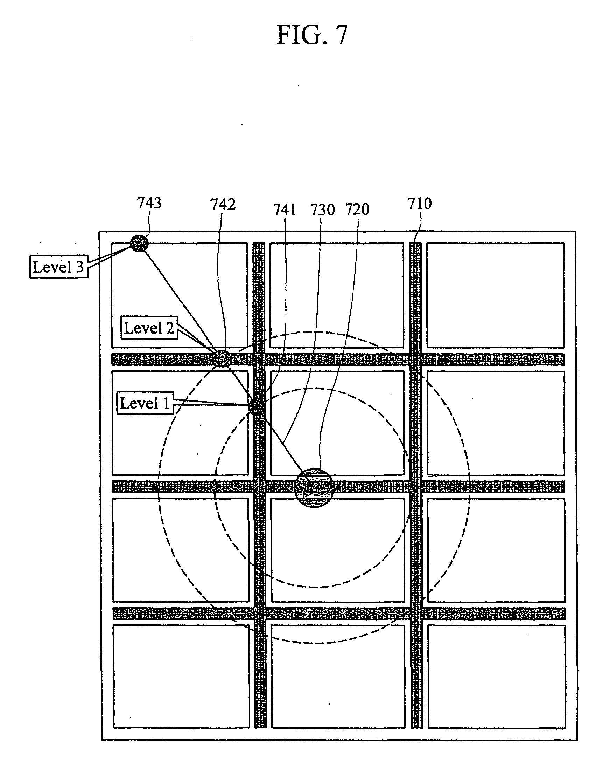

The road map detection unit 440 detects a road map corresponding to variable information received from the variable determination unit 410 and the sensor unit 130, and outputs the detected road map to the output data generation unit 430. FIG. 7 is an illustrative example of a road map depicting see-through levels according to an exemplary embodiment. In FIG. 7, a road view presence area 710, a reference position 720, and a real-time photographing direction 730 of a camera are displayed on the road map, and additionally, see-through level contact points 741, 742, and 743 may be displayed on the road map. Accordingly, the output data generation unit 430 can output a road map output from the road map detection unit 440 on a portion of the road view in an overlapping manner.

Referring again to FIG. 4, the variable determination unit 410 may further include a location determination module 411 and a see-through level determination module 413.

The location determination module 411 determines and outputs a reference position in response to a road view data request from the manipulation unit 150. The reference position may be inputted or the current location of the apparatus, as detected by the sensor unit 130, may be used. In exemplary embodiments, the reference position may be inputted by a user or received from a location service. The location determination module 411 may update the location of the reference position in real time by detecting a location change and a location change speed. The location determination module 411 may output real-time reference position information to the road map detection unit 440 as well as to the road view detection unit 420, thereby updating the reference position in real time on the road map which is output along with the road view to the display unit 160. The location determination module 411 may set a location specified by the user as the reference position in accordance with a user's request to move the reference position. In an exemplary embodiment, the user may request to a see-through level location change or a temporary reference position change.

If a see-through level location change is requested, the location determination module 411 sets the location inputted by the user as a reference position and outputs the set reference position to the road view data detection unit 420 or the road map detection unit 440. In an exemplary embodiment, the road view data detection unit 420 detects the road view data for the set reference position, and outputs the detected road view data. In an exemplary embodiment the road map detection unit 440 detects a road map data for the set reference position, and outputs the detected road map data. FIG. 5 is an illustrative example of a road map depicting a location change according to an exemplary embodiment. FIG. 5 depicts the road map detection unit 440 changing a current reference position A to a location B inputted by the user. The photographing direction of the camera and see-through levels displayed after the change may originate from the changed reference position B.

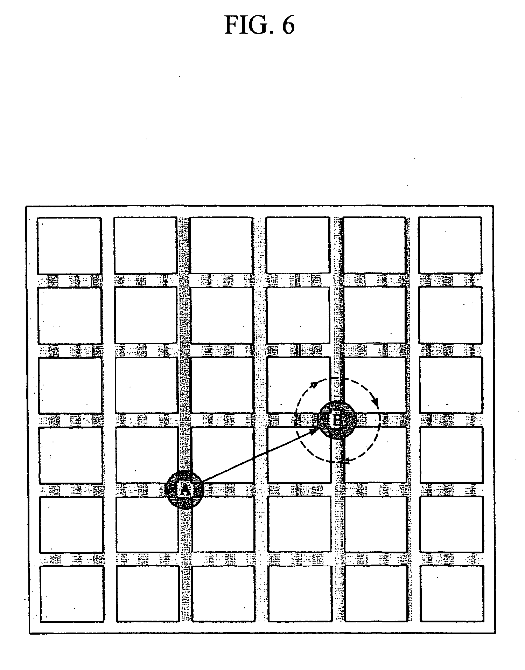

If a temporary reference position change is requested, then the location determination module 411 stores the current reference position as a fixed reference position, and sets the location inputted by the user as the reference position. The determination module 411 outputs the set reference position as the reference position until a termination request is received from the user. In an exemplary embodiment, the road view data detection unit 420 detects and outputs the road view data for the set reference position. FIG. 6 is an illustrative example of a road map depicting a temporary location change according to an exemplary embodiment. FIG. 6 depicts the results of road map detection unit 440 determining a current reference position A as a fixed reference position, and a location B inputted by the user as a temporary reference position. The location B is a temporary reference position and see-through levels are not provided at the location B. However, the road view detection unit 440 may detect road view data based on the real-time change of the camera location or a photographing direction from the temporary reference position B, as depicted by the dashed arrows in FIG. 6.

The see-through level determination module 413 determines and outputs a see-through level in response to a see-through request. The determined see-through level may be a previously set see-through level information, or see-through level information which is inputted by a user. If previously set see-through level information is used, in response to receiving a see-through request signal from the manipulation unit 150, the see-through level determination module 413 may output see-through level information corresponding to a see-through location that is closest to the reference position.

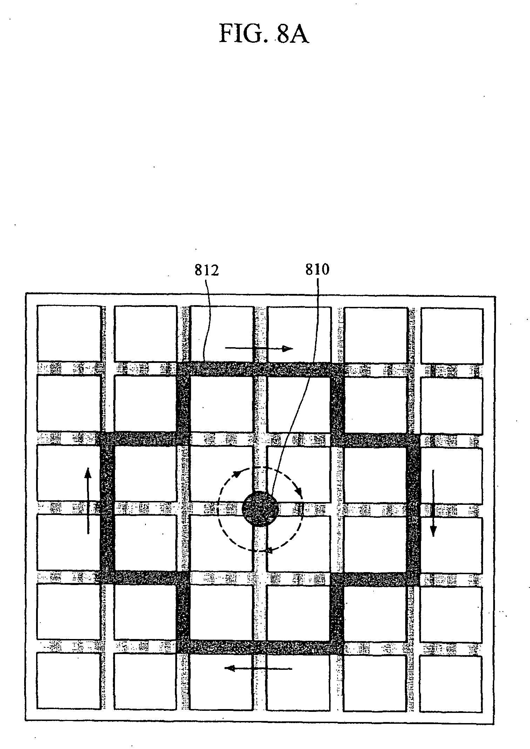

If the see-through level information inputted by a user is used, the see-through level may be input through the see-through level input bar 330 as shown in the example illustrated in FIG. 3, or by touching the see-through level display contact points 741, 742, and 743 on the screen as shown in the example illustrated in FIG. 7. Referring to FIG. 7, an initial contact point 741 corresponds to a Level 1, the second contact point 742 corresponds to a Level 2, and the third contact point 743 corresponds to a Level 3. If see-through level information is inputted, the road view data detection unit 420 detects data corresponding to the see-through level in the direction corresponding to the direction that the camera is moving or rotating in. FIG. 8A is a diagram illustrating a road map depicting road view data based on a real-time change of the photographing direction at a see-through level according to an exemplary embodiment. In an example illustrated in FIG. 8A, the area 812 corresponds to the selection of see-through Level 2 in FIG. 7 and road view data corresponding to Level 2 is displayed.

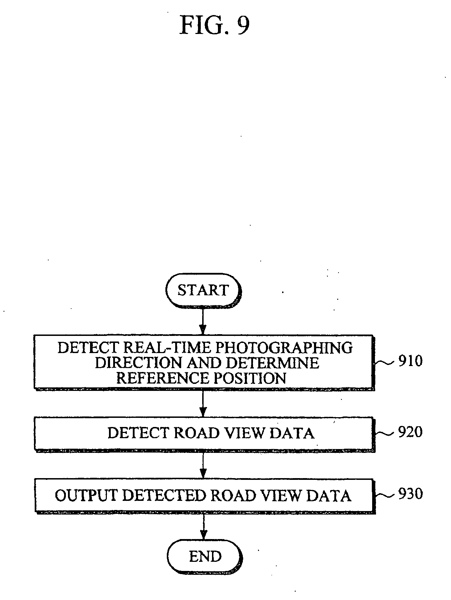

A method of providing a road view will now be described with reference to FIGS. 9-12.

FIG. 9 is a flowchart depicting a method of providing a road view according to an exemplary embodiment. In operation 910, the control unit 110 (see FIG. 1) receives a real-time photographing direction from sensor unit 130 (see FIG. 1) and determines a reference position in response to a road view request. Although not illustrated in drawings, if there is no user's request for a particular location to be established as the reference position, the control unit 110 (see FIG. 1) sets the current location detected by the sensor unit 130 (see FIG. 1) as the reference position. Once the initial reference position is set, the reference position is updated in real time if a location change is detected as the user moves. However, if there is a user's specific request to establish a reference position, the location requested by the user is set as the reference position by the control unit 110. There are various methods by which a user may request a specific location be used as a reference position by the apparatus. By way of example, a specific location name may be input by the user and set as the reference position, or a road map of a specific region may be displayed on a touch screen and a specific location on the road map chosen as the reference position by touching the touch screen. In operation 920, the control unit 110 detects road view data based on the received photographing direction and the reference position determined in real time. In operation 930, the control unit 110 outputs the detected road view data in the display unit 160 (see FIG. 1). The detected road view data may be displayed as a road map on a portion of the display unit 160 that shows the reference position and a real-time camera photographing direction.

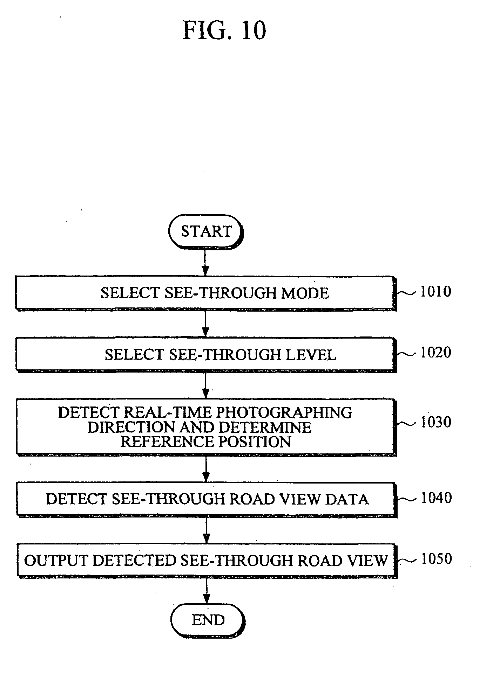

FIG. 10 is a flowchart depicting a method of providing road view data by selecting a location change mode of operation according to an exemplary embodiment.

In operation 1010, a see-through mode is selected in response to input of a see-through mode selection signal. The see-through mode selection signal may be inputted after the reference position is determined as shown in the flowchart of FIG. 9 or while a road view is being provided.

In operation 1020, the control unit 110 receives see-through level selection information. The see-through level selection information may be received by touching the see-through level contact points 741, 742, and 743 as shown in the example illustrated in FIG. 7, or by the see-through level selection bar 330 as shown in the example illustrated in FIG. 3 while the road view data is displayed.

Thereafter, in operation 1030, the control unit 110 detects a real-time photographing direction and determines a real-time reference position. In operation 1040, the control unit 110 detects road view data according to the real-time photographing direction, the reference position, and the selected see-through level. In operation 1050, the control unit 110 outputs the detected see-through road view.

That is, the control unit 110 detects a real-time photographing direction of the camera, and detects and outputs road view data corresponding to the detected real-time photographing direction. More specifically, the control unit 110 checks for changes in the angle and speed of the received photographing direction of the camera, and outputs road view data corresponding to the changes in the received photographing direction of the camera while displaying a road view moving in the photographing direction. By way of example, when a user at the reference position 810 turns a terminal including the camera left or right to change the photographing direction of the camera as shown in FIG. 8A, the control unit 110 outputs road view data 812 based on a currently set distance level and the photographing direction of the camera. As described above, FIG. 8A depicts the road view data outputted by the apparatus when Level 2 see-through data is selected in FIG. 7. If see-through Level 2 is selected and the photographing direction of the camera is changed clockwise around the reference position 810 as represented by the dotted arrow, the road view data corresponding to the see-through Level 2 is road view data of a shaded area 812 in FIG. 8A and is output corresponding to the clockwise rotation of the photography direction of the camera.

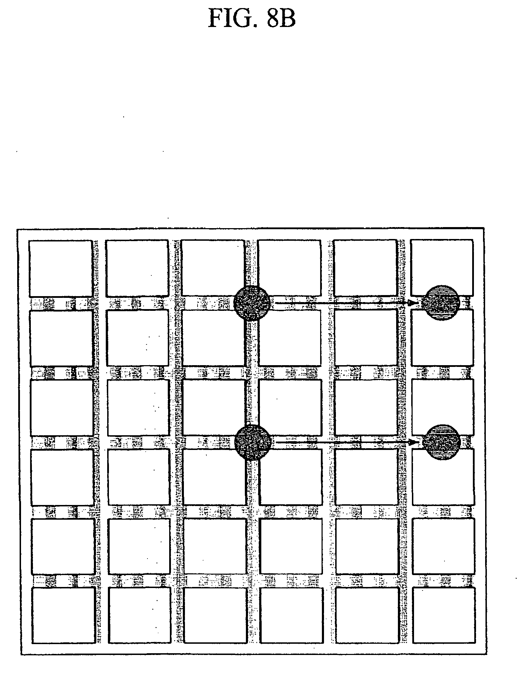

Further, the control unit 110 may detect real-time camera movement and output road view data corresponding to the detected movement. The control unit 110 may receive information about the moving direction and moving speed of the camera from sensor unit and change the reference position in real-time. By way of example, FIG. 8B is a diagram illustrating a road map depicting road view data based on a real-time change of the reference position at a see-through level according to an exemplary embodiment. If the location A is set as a reference position and road view data corresponding to a see-through Level 2 of FIG. 7 is selected, and the camera is facing in a direction of a location A', the control unit 110 detects a real-time movement of the camera and changes the reference position from the location A to a location B in real time as the camera moves from the location A to the location B. According to the real-time change of the reference position from the location A to the location B, the control unit 110 continuously detects the road view data in a direction from the location A' to a location B' and outputs the detected road view data.

Although the embodiments describing the reference position change and the photographing direction change are described separately, aspects of the invention are not limited thereto and the control unit 110 may detect and output road view data corresponding to an event of simultaneous change of the reference position and the photographing direction.

Further, the control unit 110 may output a road view screen in which the perspective of the see-through road view data is adjusted in response to receiving a zoom-in or zoom-out request signal from the user.

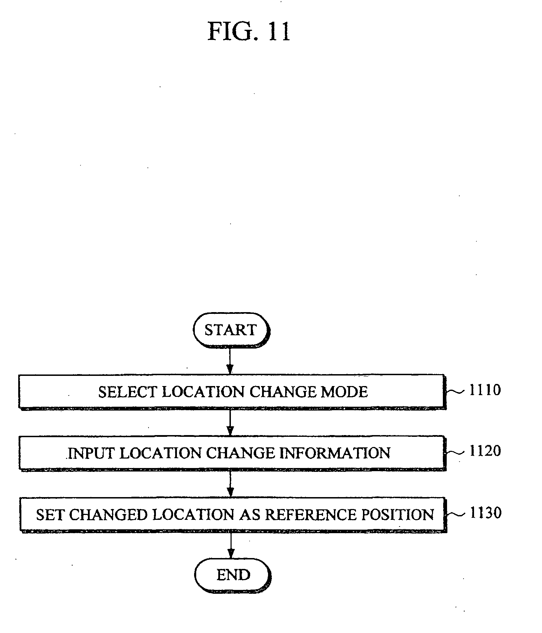

FIG. 11 is a flowchart depicting a method of providing road view data by selecting a location change mode of operation according to an exemplary embodiment.

In operation 1110, the control unit 110 (see FIG. 1) selects a location change mode in response to an inputted location change mode selection signal. While the camera is in see-through mode, the location change mode selection signal may be inputted if a user stops moving the camera and selects location change mode. The user may be at a specific location at which the user desires to obtain road view data. However aspects need not be limited thereto such that the camera may remain in movement. If the camera is not in see-through mode, the location change mode selection signal may be inputted by selecting the location change mode. In exemplary embodiments, the location change mode may be inputted by a user or received from a location service.

In operation 1120, location change information is inputted. To receive the location change information, the location change information may be input while the see-through road view is selected location change mode may be selected by touching a road map, or by directly inputting the name of a specific location into the apparatus.

In operation 1130, the input changed location is set as a reference position by the control unit 110. Accordingly, as depicted and described in reference to FIG. 5, the inputted changed location at point B is placed at the center as the new reference position and a real-time photographing direction is displayed. Then, as depicted and described in reference to FIG. 9 or 10, detection of the road view data or the see-through road view data may be performed.

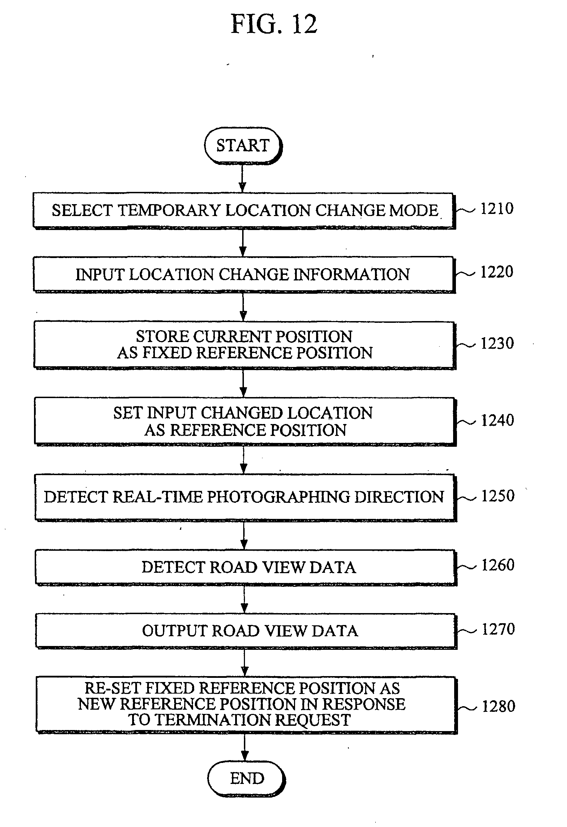

FIG. 12 is a flowchart depicting a method of providing a road view by selecting a temporary location change mode of operation according to an exemplary embodiment.

In operation 1210, temporary location change mode is selected by the control unit 110 (see FIG. 1) in response to input of a temporary location change mode selection signal. The temporary location change mode selection signal may be inputted when a user stops moving the camera and selects temporary location change mode. The user may be at a specific location at which the user desires to obtain road view data, while moving the camera in see-through mode. However aspects need not be limited thereto such that the camera may remain in movement. If the camera is not in see-through mode, the location change mode selection signal may be inputted by selecting the temporary location change mode. In exemplary embodiments, the location change mode selection signal may be inputted by a user or received from a location service.

In operation 1220, location change information about the changed location is input and received by the control unit 110. In an exemplary embodiment, the location change information may be inputted while in see-through mode. In an exemplary embodiment, the temporary location change mode may be activated by selecting a particular location on the road map. Further, if a temporary location mode is activated a distance level may be manipulated or changed to 0, information displayed is for the selected location.

In operation 1230, a current reference position is stored as a fixed reference position by the control unit 110. In operation 1240, the inputted changed location is set as a reference position. By way of example as shown in FIG. 6, a photographing direction based on the fixed reference position A is displayed, whereas a photographing direction based on the inputted changed location, reference position B, is not displayed and the outputted road view results from moving or rotating the camera at the new reference position B. Thereafter, in operation 1250, the real-time photographing direction is detected. The road view data corresponding to the reference point and the photographing direction is detected in operation 1260, and is outputted in operation 1270. In operation 1280, the fixed reference position is re-set as a reference position in response to a termination request that is accepted by the user.

As described above, the exemplary embodiment detects changes in the location and direction of a camera and automatically adjusts the displayed road view data to correspond to the changes detected. Thus a user can is conveniently provided with the road view data without inputting additional signals regarding changes of in the location and photographing direction.

In addition, the road view data is provided automatically according to movement of the camera, and thus the user can experience it as if he or she directly looked around the vicinity of a corresponding location.

## Claims

1. An apparatus for providing road view (310) data, comprising:
a camera (120) configured to capture an image and output the captured image;
a sensor unit (130) configured to receive the captured image and output sensing data, comprising a photographing direction (220) of the camera (120);
a manipulation unit (150) configured to receive data, the data comprising a road view (310) data request signal;
a control unit (110) configured to receive the captured image, the sensing data and
the road view (310) data request signal, and to determine, at a reference position (210), road view (310) data corresponding to the received photographing direction (220) of the camera (120) and output the determined road view (310) data in response to the received road view (310) data request signal; and
a display unit (160) configured to display image data containing the determined road view (310) data, **characterised in that**
the manipulation unit (150) is configured to receive see--through level information and
the control unit (110) is configured to detect road view (310) data corresponding to the received see-through level information,
wherein the see-through level information corresponds to the number of road views that are present on a line from the reference position in the photographing direction.

2. The apparatus of claim 1, wherein the sensor unit (130) is configured to output sensing data about changes in a speed, an angle of the camera (120), and the control unit (110) is configured to adjust the displayed road view (310) data to correspond to the changes in the speed of the apparatus and the angle of the camera (120).

3. The apparatus of claim 1, wherein the sensor unit (130) is configured to output sensing data obtained by detecting a movement of the camera (120), and the control unit (110) is configured to change the reference position (210) based on the sensing data about the movement of the camera (120).

4. The apparatus of claim 1, wherein the sensor unit (130) is configured to detect and output a current location of the camera (120), and the control unit (110) is configured to set the detected current location of the camera (120) as the reference position (210).

5. The apparatus of claim 1, wherein the manipulation unit (150) is configured to receive an inputted location and the control unit (110) is configured to determine the received inputted location as the reference position (210).

6. The apparatus of claim 1, wherein the control unit (110) is configured to detect road view (310) data corresponding to a previously set default see-through level.

7. The apparatus of claim 1, wherein the control unit (110) is configured to detect road view (310) data corresponding to a see-through level of a location that is the closest to the reference position (210).

8. The apparatus of claim 1, wherein the control unit (110) is configured to output a road map (320) to the display unit (160), wherein the road map (320) comprises the reference position (210) and an area in which the road view (310) data is present, and, preferably, further comprises a camera (120) photographing direction (220) from the reference position (210) and/or see-through level display information.

9. The apparatus of claim 1, wherein the control unit (110) is further configured to set a location as a reference position (210) in response to input of a location change request signal, the location change request signal preferably being input by a user or a location service.

10. The apparatus of claim 1, wherein the manipulation unit (150) is configured to receive a temporary reference position change request signal and the control unit (110) is configured to set the current location as a fixed reference position, set a location inputted by the user as a temporary reference position and detect the road view corresponding to a camera (120) photographing direction (210) of the temporary reference position until another request is received.

11. The apparatus of claim 1, wherein the manipulation unit (150) is configured to receive a zoom-in/zoom-out request from the user and the control unit (110) is further configured to adjust an angle of view of road view (310) data and output the adjusted road view (310) data.

12. A method of providing road view (310) data from an apparatus comprising a camera (120) and a sensor unit (130), the method comprising:
sensing the photographing direction (220) of the camera (120);
determining a reference position (210) of the camera (120);
detecting the road view (310) data corresponding to the reference position (210) and the photographing direction (220); and
outputting the detected road view (310) data, **characterised in that** the method further comprises
receiving see-through level information,
wherein the detecting of the road view (310) data comprises detecting see-through road view (310) data corresponding to the reference position (210), the photographing direction (220), and the see-through level information,
wherein the see-through level information corresponds to the number of road views that are present on a line from the reference position in the photographing direction.

13. The method of claim 12, wherein the determining of the reference position (210) further comprises at least one of:
- sensing changes in the speed and angle of the camera (120), detecting road view (310) data corresponding to the changes of in the speed and angle of the camera (120) and outputting the detected road view (210) data;
- determining a current location as the reference position (210); and
- determining an inputted location as the reference position (210).

14. The method of claim 12, wherein the determining of the reference position (210) results in changing the reference position based on movements of the camera (120).

15. The method of claim 12, wherein the detecting of the road view (310) data comprises at least one of:
- detecting road view (310) data corresponding to a previously set default see-through level; and
- detecting road view (310) data corresponding to a see-through level of a location that is the closest to the reference position (210).

16. The method of claim 12, further comprising:
outputting a road map (320) comprising the reference position (210) and an area in which the road view (310) data is present, the road view (310) data preferably comprising a camera (120) photographing direction (220) from the reference position (210) and/or see-through level display information.

17. The method of claim 12, further comprising:
setting an inputted location as a reference position (210).

18. The method of claim 12, further comprising:
setting a current location as a reference position (210) and setting an inputted location as a temporary reference position; and
detecting a road view (310) corresponding to a camera (120) photographing direction (220) from the temporary reference position until another request is received, the inputted location preferably being input by a user or a location service.

## Patentansprüche

1. Vorrichtung zum Bereitstellen von Straßenansicht (310)-Daten, umfassend:
eine Kamera (120), welche dazu eingerichtet ist, ein Bild aufzunehmen und das aufgenommene Bild auszugeben;
eine Sensor-Einheit (130), welche dazu eingerichtet ist, das aufgenommene Bild zu erhalten und Sensor-Daten auszugeben, welche eine Fotografier-Richtung (220) der Kamera (120) umfassen;
eine Bedien-Einheit (150), welche dazu eingerichtet ist, Daten zu erhalten, wobei die Daten ein Straßenansicht (310)-Daten-Anfragesignal umfassen;
eine Steuer-/Regeleinheit (110), welche dazu eingerichtet ist, das aufgenommene Bild, die Sensor-Daten und das Straßenansicht (310)-Daten-Anfragesignal zu erhalten, und an einer Referenzposition (210) Straßenansicht (310)-Daten zu bestimmen, welche der erhaltenen Fotografier-Richtung (220) der Kamera (120) entsprechen und die bestimmten Straßenansicht (310)-Daten als Reaktion auf das erhaltene Straßenansicht (310)-Daten-Anfragesignal auszugeben; und
eine Anzeige-Einheit (160), welche dazu eingerichtet ist, Bilddaten anzuzeigen, welche die bestimmten Straßenansicht (310)-Daten umfassen, **dadurch gekennzeichnet, dass**
die Bedien-Einheit (150) dazu eingerichtet ist, Durchsicht-Niveauinformationen zu erhalten und die Steuer-/Regeleinheit (110) dazu eingerichtet ist, Straßenansicht (310)-Daten entsprechend der erhaltenen Durchsicht-Niveauinformationen zu detektieren,
wobei die Durchsicht-Niveauinformationen der Anzahl von Straßenan - sichten entsprechen, welche auf einer Linie von der Referenzposition in der Fotografier-Richtung vorliegen.

2. Vorrichtung nach Anspruch 1, wobei die Sensor-Einheit (130) dazu eingerichtet ist, Sensor-Daten über Änderungen einer Geschwindigkeit eines Winkels der Kamera (120) auszugeben, und die Steuer-/Regeleinheit (110) dazu eingerichtet ist, die angezeigten Straßenansicht (310)-Daten derart anzupassen, dass sie den Änderungen der Geschwindigkeit der Vorrichtung und des Winkels der Kamera (120) entsprechen.

3. Vorrichtung nach Anspruch 1, wobei die Sensor-Einheit (130) dazu eingerichtet ist, Sensor-Daten auszugeben, welche durch ein Detektieren einer Bewegung der Kamera (120) erhalten worden sind, und die Steuer-/Regeleinheit (110) dazu eingerichtet ist, die Referenzposition (210) auf Grundlage der Sensor-Daten über die Bewegung der Kamera (120) zu ändern.

4. Vorrichtung nach Anspruch 1, wobei die Sensor-Einheit (130) dazu eingerichtet ist, einen momentane Standort der Kamera (120) zu detektieren und auszugeben, und die Steuer-/Regeleinheit (110) dazu eingerichtet ist, den detektierten momentanen Standort der Kamera (120) als die Referenzposition (210) zu setzen.

5. Vorrichtung nach Anspruch 1, wobei die Bedien-Einheit (150) dazu eingerichtet ist, einen eingegebenen Standort zu erhalten, und die Steuer-/Regeleinheit (110) dazu eingerichtet ist, den erhaltenen eingegebenen Standort als die Referenzposition (210) zu bestimmen.

6. Vorrichtung nach Anspruch 1, wobei die Steuer-/Regeleinheit (110) dazu eingerichtet ist, Straßenansicht (310)-Daten entsprechend eines zuvor gesetzten Vorgabe-Durchsicht-Niveaus zu detektieren.

7. Vorrichtung nach Anspruch 1, wobei die Steuer-/Regeleinheit (110) dazu eingerichtet ist, Straßenansicht (310)-Daten entsprechend eines Durchsicht-Niveaus eines Standorts zu detektieren, welcher am nächsten zu der Referenzposition (210) liegt.

8. Vorrichtung nach Anspruch 1, wobei die Steuer-/Regeleinheit (110) dazu eingerichtet ist, eine Straßenkarte (320) an die Anzeige-Einheit (160) auszugeben, wobei die Straßenkarte (320) die Referenzposition (210) und ein Gebiet umfasst, in welchem die Straßenansicht (310)-Daten vorliegen, und vorzugsweise ferner eine Kamera (120)-Fotografier-Richtung (220) von der Referenzposition (210) oder/und Durchsicht-Niveau-Informationen umfasst.

9. Vorrichtung nach Anspruch 1, wobei die Steuer-/Regeleinheit (110) ferner dazu eingerichtet ist, einen Standort als eine Referenzposition (210) als Reaktion auf eine Eingabe eines Standortwechsel-Anfragesignals zu setzen, wobei das Standortwechsel-Anfragesignal vorzugsweise von einem Benutzer oder einem Standort-Service eingegeben wird.

10. Vorrichtung nach Anspruch 1, wobei die Bedien-Einheit (150) dazu ein - gerichtet ist, ein Zeitweilige-Referenzposition-Änderung-Anfragesignal zu erhalten, und die Steuer-/Regeleinheit (110) dazu eingerichtet ist, den momentanen Standort als eine festgelegte Referenzposition zu setzen, einen von dem Benutzer eingegebenen Standort als eine zeitweilige Referenzposition zu setzen und die Straßenansicht entsprechend einer Kamera (120)-Fotografier-Richtung (210) der zeitweiligen Referenzposition zu detektieren, bis eine weitere Referenzposition-Anfrage erhalten wird.

11. Vorrichtung nach Anspruch 1, wobei die Bedien-Einheit (150) dazu eingerichtet ist, eine Zoom-In/Zoom-Out-Anfrage von dem Benutzer zu erhalten, und die Steuer-/Regeleinheit (110) ferner dazu eingerichtet ist, einen Ansichtswinkel von Straßenansicht (310)-Daten anzupassen und die angepassten Straßenansicht (310)-Daten auszugeben.

12. Verfahren zum Bereitstellen von Straßenansicht (310)-Daten von einer Vorrichtung umfassend eine Kamera (120) und eine Sensor-Einheit (130), wobei das Verfahren umfasst:
Detektieren der Fotografier-Richtung (220) der Kamera (120);
Bestimmen einer Referenzposition (210) der Kamera (120);
Detektieren der Straßenansicht (310)-Daten entsprechend der Referenzposition (210) und der Fotografier-Richtung (220); und
Ausgeben der detektierten Straßenansicht (310)-Daten, **dadurch gekennzeichnet, dass** das Verfahren ferner umfasst:
Erhalten von Durchsicht-Niveauinformationen,
wobei das Detektieren der Straßenansicht (310)-Daten ein Detektieren von Durchsicht-Straßenansicht (310)-Daten entsprechend der Referenzposition (210), der Fotografier-Richtung (220) und den Durchsicht-Niveauinformationen umfasst,
wobei die Durchsicht-Niveauinformationen der Anzahl von Straßenansichten entsprechen, die auf einer Linie von der Referenzposition in der Fotografier-Richtung vorliegen.

13. Verfahren nach Anspruch 12. wobei das Bestimmen der Referenzposition (210) ferner wenigstens eines umfasst von:
- Detektieren von Änderungen der Geschwindigkeit und des Wnkels der Kamera (120), Detektieren von Straßenansicht (310)-Daten entsprechend den Änderungen der Geschwindigkeit und des Winkels der Kamera (120) und Ausgeben der detektierten Straßenansicht (210)-Daten;
- Bestimmen eines momentanen Standorts als die Referenzposition (210); und
- Bestimmen eines eingegebenen Standorts als die Referenzposition (210).

14. Verfahren nach Anspruch 12, wobei das Bestimmen der Referenzposition (210) zu einem Ändern der Referenzposition auf Grundlage von Bewegungen der Kamera (120) führt.

15. Verfahren nach Anspruch 12, wobei das Detektieren der Straßenansicht (310)-Daten wenigstens eines umfasst von:
- Detektieren von Straßenansicht (310)-Daten entsprechend eines zuvor gesetzten Vorgabe-Durchsicht-Niveaus; und
- Detektieren von Straßenansicht (310)-Daten entsprechend eines Durchsicht-Niveaus von einem Standort, welcher am nächsten zu der Referenzposition (210) liegt.

16. Verfahren nach Anspruch 12, ferner umfassend:
Ausgeben einer Straßenkarte (320), welche die Referenzposition (210) und ein Gebiet umfasst, in welchem die Straßenansicht (310)-Daten vorliegen, wobei die Straßenansicht (310)-Daten vorzugsweise eine Kamera (120)-Fotografier-Richtung (220) von der Referenzposition (210) oder/und Durchsicht-Niveau-Anzeigeinformationen umfasst.

17. Verfahren nach Anspruch 12, ferner umfassend:
Setzen eines eingegebenen Standorts als eine Referenzposition (210).

18. Verfahren nach Anspruch 12, ferner umfassend:
Setzen eines momentanen Standorts als eine Referenzposition (210) und Setzen eines eingegebenen Standorts als eine zeitweilige Referenzposition; und
Detektieren einer Straßenansicht (310) entsprechend einer Kamera (120)-Fotografier-Richtung (220) von der zeitweiligen Referenzposition, bis eine weitere Anfrage erhalten wird, wobei der eingegebene Standort vorzugsweise von einem Benutzer oder einem Standort-Service ein - gegeben wird.

## Revendications

1. Appareil pour fournir des données de vue routière (310), comprenant:
une caméra (120) configurée de manière à capturer une image et à générer l'image capturée;
une unité de capteur (130) configurée de manière à recevoir l'image capturée et à générer des données de détection, comprenant une direction de photographie (220) de la caméra (120) ;
une unité de manipulation (150) configurée de manière à recevoir des données, les données comprenant un signal de demande de données de vue routière (310);
une unité de commande (110) configurée de manière à recevoir l'image capturée, les données de détection et le signal de demande de données de vue routière (310), et à déterminer, à une position de référence (210), des données de vue routière (310) qui correspondent à la direction de photographie reçue (220) de la caméra (120), et à générer les données de vue routière déterminées (310) en réponse au signal de demande de données de vue routière (310) reçu; et
une unité d'affichage (160) configurée de manière à afficher des données d'image contenant les données de vue routière déterminées (310),
**caractérisé en ce que**:
l'unité de manipulation (150) est configurée de manière à recevoir des informations de niveau de vue par transparence; et
l'unité de commande (110) est configurée de manière à détecter des données de vue routière (310) qui correspondent aux informations de niveau de vue par transparence reçues,
dans lequel les informations de niveau de vue par transparence correspondent au nombre de vues routières qui sont présentes sur une ligne s'étendant à partir de la position de référence dans la direction de photographie.

2. Appareil selon la revendication 1, dans lequel l'unité de capteur (130) est configurée de manière à générer des données de détection relatives à des variations d'une vitesse et d'un angle de la caméra (120), et l'unité de commande (110) est configurée de manière à régler les données de vue routière affichées (310) de telle sorte qu'elles correspondent aux variations de la vitesse de l'appareil et de l'angle de la caméra (120).

3. Appareil selon la revendication 1, dans lequel l'unité de capteur (130) est configurée de manière à générer des données de détection obtenues en détectant un déplacement de la caméra (120), et l'unité de commande (110) est configurée de manière à changer la position de référence (210) sur la base des données de détection relatives au déplacement de la caméra (120).

4. Appareil selon la revendication 1, dans lequel l'unité de capteur (130) est configurée de manière à détecter et à générer une position actuelle de la caméra (120), et l'unité de commande (110) est configurée pour définir la position actuelle détectée de la caméra (120) en tant que position de référence (210).

5. Appareil selon la revendication 1, dans lequel l'unité de manipulation (150) est configurée de manière à recevoir une position entrée, et l'unité de commande (110) est configurée de manière à définir la position entrée reçue en tant que position de référence (210).

6. Appareil selon la revendication 1, dans lequel l'unité de commande (110) est configurée de manière à détecter des données de vue routière (310) qui correspondent à un niveau de vue par transparence par défaut défini préalablement.

7. Appareil selon la revendication 1, dans lequel l'unité de commande (110) est configurée de manière à détecter des données de vue routière (310) qui correspondent à un niveau de vue par transparence d'une position qui est la plus proche de la position de référence (210).

8. Appareil selon la revendication 1, dans lequel l'unité de commande (110) est configurée de manière à générer une carte routière (320) sur l'unité d'affichage (160), dans lequel la carte routière (320) comprend la position de référence (210) et une zone dans laquelle les données de vue routière (310) sont présentes et, de préférence, comprend en outre une direction de photographie (220) de la caméra (120) à partir de la position de référence (210) et/ou des informations d'affichage de niveau de vue par transparence.

9. Appareil selon la revendication 1, dans lequel l'unité de commande (110) est en outre configurée de manière à définir une position en tant que position de référence (210) en réponse à une entrée d'un signal de demande de changement de position, le signal de demande de changement de position étant entré par un utilisateur ou un service de localisation.

10. Appareil selon la revendication 1, dans lequel l'unité de manipulation (150) est configurée de manière à recevoir un signal de demande de changement de position de référence temporaire, et l'unité de commande (110) est configurée de manière à définir la position actuelle en tant que position de référence fixe, définir une position entrée par l'utilisateur en tant que position de référence temporaire, et détecter la vue routière correspondant à une direction de photographie (220) de la caméra (120) de la position de référence temporaire jusqu'à ce qu'une autre demande soit reçue.

11. Appareil selon la revendication 1, dans lequel l'unité de manipulation (150) est configurée de manière à recevoir une demande de zoom avant / zoom arrière en provenance de l'utilisateur, et l'unité de commande (110) est en outre configurée de manière à régler un angle de vue des données de vue routière (310) et à générer les données de vue routière réglées (310) .

12. Procédé de fourniture de données de vue routière (310) à partir d'un appareil comprenant une caméra (120) et une unité de capteur (130), le procédé comprenant les étapes suivantes:
détecter la direction de photographie (220) de la caméra (120) ;
déterminer une position de référence (210) de la caméra (120) ;
détecter les données de vue routière (310) qui correspondent à la position de référence (210) et à la direction de photographie (220); et
générer les données de vue routière détectées (310),
**caractérisé en ce que** le procédé comprend en outre l'étape consistant à recevoir des informations de niveau de vue par transparence,
dans lequel la détection des données de vue routière (310) comprend la détection de données de vue routière par transparence (310) qui correspondent à la position de référence (210), à la direction de photographie (220) et aux informations de niveau de vue par transparence,
dans lequel les informations de niveau de vue par transparence correspondent au nombre de vues routières qui sont présentes sur une ligne s'étendant à partir de la position de référence dans la direction de photographie.

13. Procédé selon la revendication 12, dans lequel la détermination de la position de référence (210) comprend en outre au moins une des étapes suivantes:
- détecter des variations de la vitesse et d'un angle de la caméra (120), détecter des données de vue routière (310) qui correspondent aux variations de la vitesse et de l'angle de la caméra (120), et générer les données de vue routière détectées (310) ;
- définir une position actuelle en tant que position de référence (210) ; et
- définir une position entrée en tant que position de référence (210).

14. Procédé selon la revendication 12, dans lequel la détermination de la position de référence (210) entraîne un changement de la position de référence sur la base des déplacements de la caméra (120).

15. Procédé selon la revendication 12, dans lequel la détection des données de vue routière (310) comprend au moins une des étapes suivantes:
- détecter des données de vue routière (310) qui correspondent à un niveau de vue par transparence par défaut défini préalablement; et
- détecter des données de vue routière (310) qui correspondent à un niveau de vue par transparence d'une position qui est la plus proche de la position de référence (210).

16. Procédé selon la revendication 12, comprenant en outre l'étape consistant à générer une carte routière (320) comprenant la position de référence (210) ainsi qu'une zone dans laquelle les données de vue routière (310) sont présentes, les données de vue routière (310) comprenant de préférence une direction de photographie (220) de la caméra (120) à partir de la position de référence (210) et/ou des informations d'affichage de niveau de vue par transparence.

17. Procédé selon la revendication 12, comprenant en outre l'étape consistant à définir une position entrée en tant que position de référence (210).

18. Procédé selon la revendication 12, comprenant en outre les étapes suivantes:
définir une position actuelle en tant que position de référence (210) et définir une position entrée en tant que position de référence temporaire; et
détecter une vue routière (310) correspondant à une direction de photographie (220) de la caméra (120) à partir de la position de référence temporaire jusqu'à ce qu'une autre demande soit reçue, la position entrée étant de préférence entrée par un utilisateur ou un service de localisation.
